## Europäisches Patentamt
## European Patent Office
## Office européen des brevets

(19)

(11) Veröffentlichungsnummer : **0 161 296**
**B1**

(12) **EUROPÄISCHE PATENTSCHRIFT**

(45) Veröffentlichungstag der Patentschrift :
19.08.87

(51) Int. Cl.⁴ : **B 62 M 11/16**, B 62 L 5/04,
A 61 G 5/02, F 16 D 41/30

(21) Anmeldenummer : 84904126.4

(22) Anmeldetag : 07.11.84

(86) Internationale Anmeldenummer :
PCT/EP 84/00353

(87) Internationale Veröffentlichungsnummer :
WO/8502155 (23.05.85 Gazette 85/12)

(54) ÜBERSETZUNGSNABE MIT FREILAUF, INSBESONDERE FÜR ROLLSTÜHLE.

(30) Priorität : 09.11.83 DE 3340407

(43) Veröffentlichungstag der Anmeldung :
21.11.85 Patentblatt 85/47

(45) Bekanntmachung des Hinweises auf die Patenterteilung : 19.08.87 Patentblatt 87/34

(84) Benannte Vertragsstaaten :
AT BE CH DE FR GB LI LU NL SE

(56) Entgegenhaltungen :
FR-A- 326 699
FR-A- 486 400
FR-A- 514 673
FR-A- 685 706
FR-A- 2 281 847
US-A- 3 563 568

(73) Patentinhaber : SANITÄTSHAUS HEINRICH OESTER-REICH GMBH
Vor dem Steintor 37
D-2800 Bremen 1 (DE)

(72) Erfinder : ZACH, Wolfgang
Rembertiring 63
D-2800 Bremen 1 (DE)
Erfinder : GIESAU, Alfred
Eduard-Mörike-Str. 8
D-2805 Stuhr 4 (DE)

(74) Vertreter : Eisenführ & Speiser
Martinistrasse 24
D-2800 Bremen 1 (DE)

## Beschreibung

Die Erfindung betrifft bezieht sich auf eine Übersetzungsnabe nach dem Oberbegriff des Hauptanspruchs.

Aus der DE-A-2 439 332 die dem Oberbegriff des Hauptanspruchs entspricht, der DE-A-2 556 029, der DE-C-2 159 770 und der DE-A-2 514 418 sind derartige Übersetzungsnaben bekannt. Diese bekannten Naben sind Fahrradnaben und besitzen einen Freilauf, der eine freie Vorwärtsdrehung der Nabenhülse relativ zum Antreiber ermöglicht. Ausserdem besitzen diese bekannten Naben auch eine Rücktrittsbremse, mittels der über einen Bremskonus und ein Bremsglied von innen Bremskräfte auf die Nabenhülse ausgeübt werden, wenn der Antreiber relativ zu der am Fahrzeugrahmen befestigten Nabenachse ein vorgegebenes Maß zurückgedreht wird, bis die Bremse angezogen ist. Das Planetengetriebe dient bei den bekannten Übersetzungsnaben dazu, unterschiedliche Übersetzungen zwischen Antreiber und Nabenhülse zu verwirklichen. Durch axiale Verschiebung der Kupplungshülse, welche zwischen dem Antreiber und den Elementen des Planetengetriebes wirkt bzw. durch axiale Verschiebung der Elemente des Planetengetriebes lassen sich die verschiedenen Übersetzungen — in bekannter Weise — schaltbar herstellen.

Diese bekannte Nabe ist zum Einbau in Rollstühle ungeeignet, da sie — entsprechend ihrem Verwendungszweck für Fahrräder — keinen Antrieb der Nabenhülse in Rückwärtsrichtung zulässt. Ausserdem besitzen diese bekannten Naben alle Deblockage-Mechaniken, welche ein Lösen der Bremse in allen Fällen sicherstellen. Um dies zu ermöglichen, erzeugen diese Deblockage-Mechaniken ein relativ grosses Drehspiel von 20° bis 40° in Vorwärtsrichtung zwischen Antreiber und Nabenhülse. Dieses Drehspiel stellt sicher, dass — bei voll gebremster Rücktrittsbremse — zuerst nur der Bremskonus zurückgezogen und damit das Bremsglied gelöst wird, und dass erst danach das zwischen Antreiber und Nabenhülse wirkende Klinkengesperre wieder die Nabenhülse fest in Vorwärtsrichtung mitnimmt. Konstruktionsbedingt ist dieses Drehspiel zwischen Antreiber und Nabenhülse bei den bekannten Naben auch dann vorhanden, wenn der Antreiber über das entsprechende Klinkengesperre die zuvor freilaufende Nabenhülse wieder in Vorwärtsrichtung antreiben soll.

Da die bekannten Naben keinen Antrieb in Rückwärtsrichtung zulassen, und da ausserdem immer ein Drehspiel von etwa 20 bis 40° überwunden werden muss, wenn der Antreiber auf die zuvor freilaufende Nabenhülse ein Antriebsmoment ausüben will, lässt sich diese bekannte Nabe bei Rollstühlen nicht einsetzen.

Aus der DE-A-2 629 839 ist ferner eine spezielle Rollstuhlnabe bekannt, die einen Freilaufmechanismus besitzt. Aus der DE-A-3 241 614 ist ebenfalls ein Rollstuhl bekannt der mittels eines Handhebels betätigbar ist und eine Freilaufkupplung besitzt. Die Naben dieser bekannten Rollstühle besitzen kein schaltbares Übersetzungsgetriebe, und sie besitzen ausserdem keine vom Antreiber betätigbare aktive Bremse.

Aus der DE-A-2 929 138 ist ferner ein Rollstuhl bekannt, der eine Nabe mit einem Getriebe besitzt, welches — schaltbar — eine Drehrichtungsumkehr ermöglicht und ausserdem wählbare Übersetzungsverhältnisse aufweist. Diese bekannte Nabe besitzt ebenfalls keine vom Antreiber aktivierbare Rücktrittsbremse.

Aufgabe der Erfindung ist es demgegenüber, eine Übersetzungsnabe der eingangs genannten Art derart weiterzubilden, dass ein einfacher Antrieb in Vorwärts- und in Rückwärtsrichtung ohne wesentliches Drehspiel oder Totgangwinkel zwischen Antreiber und Nabenhülse möglich ist.

Diese Aufgabe wird erfindungsgemäss mit den Merkmalen des Hauptanspruchs gelöst.

Wird bei der erfindungsgemässen Nabe der Antreiber — relativ zur festen Nabenachse — zurückgedreht, so wird dadurch über die Kupplungshülse und das Planetengetriebe der Planetenradträger ebenfalls zurückgedreht, woraufhin der Bremskonus auf seiner Schnecke sich axial gegen das Bremsglied verfährt und das Bremsglied gegen die Nabenhülse spreizt und dadurch die Nabenhülse abbremst. Dadurch ist die gebremste Ruhestellung der Nabenhülse erreicht. Wird — aus dieser Bremsstellung heraus — der Antreiber nun noch weiter in Rückwärtsrichtung gedreht, so nimmt der Antreiber über die Kupplungshülse, das Planetengetriebe und über die Reibschlussverbindung der aktivierten Bremse die Nabenhülse in Rückwärtsrichtung mit, weil nun das zweite Klinkengesperre freiläuft, so dass mindestens derjenige Teil des Hebelkonus, gegen den sich das Bremsglied abstützt, in Rückwärtsrichtung mitdrehen kann.

Die erfindungsgemässe Nabe ermöglicht es also, durch Rückwärtsdrehung des Antreibers, der bei einem Rollstuhl fest mit dem Greifreifen verbunden ist, zuerst die Rücktrittsbremse auszulösen, die Nabenhülse dadurch zum Stillstand zu bringen, und anschliessend durch weiteres Rückwärtsdrehen die Nabenhülse über den Reibschluss der aktivierten Bremse in Rückwärtsrichtung mitzunehmen. Ein mit dieser Nabe ausgestatteter Rollstuhl lässt sich daher vom Greifreifen in Vorwärtsrichtung antreiben, wobei ein Freilauf zwischen Nabenhülse/Laufrad relativ zum Antreiber/Greifrad gegeben ist. Aus der Vorwärtsbewegung oder dem Stillstand des Rollstuhls lässt sich die Rücktrittsbremse aktivieren. Durch weiteres Rückwärtsdrehen des Antreibers findet dann eine Rückwärtsdrehung der Nabenhülse/des Laufrades statt.

Wird die Nabenhülse aus einer Vorwärtsdrehung abgebremst, so wirken in der Regel starke Bremskräfte zwischen Nabenhülse und gespreiztem Bremsglied. Rastet nun zufällig bei Erreichen des Stillstandes gerade eine Sperrklinke des ersten Klinkengesperres in die zugehörige Verzähnung ein, so wird die bei bekannten Übersetzungsnaben auftretende Verspannung von Nabenhülse, erstem Klinkengesperre, Planetengetriebeelementen, Bremskonus und Bremsglied, die dort nur durch zusätzliche Deblockage-Mechaniken und entsprechende Totgangwinkel/Drehspiel beseitigt werden kann, erfindungsgemäss dadurch wirksam vermieden, dass der Antreiber sich über die vollständig abgebremste Stellung hinaus zurückdrehen lässt. Bei erneuter Rückwärtsdrehung des Antreibers — aus dem Stillstand heraus — drehen sich nämlich die Sperrklinken des ersten Klinkengesperres — wegen der Übersetzung des Planetengetriebes — schneller in Rückwärtsrichtung als die Nabenhülse, welche über den Reibschluss der Bremse mit dem Planetenradträger fest gekoppelt ist. Das erste Klinkengesperre läuft also erfindungsgemäss bei einer aus dem Stillstand einsetzenden Rückdrehung des Antreibers frei und verhindert durch diesen Freilauf die Verspannung oder Blockage der Bremse.

Zusätzliche Deblockage-Mechaniken, die bei jeder — relativ zur Nabenhülse erfolgenden — Vorwärtsdrehung oder Vorwärtsantriebsbewegung des Antreibers einen grossen Totgangwinkel/Drehspiel erzeugen und welche bei Anwendung in einem Rollstuhl die verfügbare Antriebsbewegung der Hände im wesentlichen in den Totgangwinkel/Drehspiel umsetzen würden, sind daher entbehrlich. Vielmehr kann erfindungsgemäss für das erste Klinkengesperre eine besonders geringe Zahnteilung t und/oder eine relativ grosse Anzahl an Sperrklinken mit unterschiedlichem Abstand angeordnet werden, um den Vorwärts-Totgangwinkel bevorzugt auf einen Wert zwischen etwa 1° und 6° zu begrenzen. Einem Rollstuhlbenutzer, der seinen Rollstuhl über die erfindungsgemässe Nabe mittels eines am Antreibers befestigten Greifreifens antreibt, steht daher im wesentlichen der volle, bei jedem Umgreifen zurücklegbare Drehwinkel zum Antrieben des Rollstuhls zur Verfügung.

Vorteilhafterweise ist der Hebelkonus in einen äusseren, mittels des Bremshebels am Rahmen des Rollstuhls festsetzbaren Teil, und einen inneren drehbaren Teil geteilt. Das zweite Klinkengesperre ist zwischen dem äusseren und inneren Teil des Hebelkonus angeordnet.

Alternativ lässt sich das zweite Klinkengesperre auch zwischen den Hebelkonus und den Bremshebel bzw. den Rahmen des Fahrzeugs einsetzen. Auf den Hebelkonus wird dann stirnseitig von aussen ein Zahnrad aufgesetzt, welches mit einer federbelasteten Sperrklinke zusammenwirkt, die am Bremshebel befestigt ist und den Bremskonus mit dem Bremshebel verkoppelt, wenn auf den Bremskonus Drehmomente aufgrund eines Bremsvorganges ausgeübt werden. In Rückwärtsdrehrichtung klinkt der Bremskonus dagegen aus der Sperrklinke aus und läuft frei.

Besonders bevorzugt ist das erste Klinkengesperre zwischen dem Hohlrad des Planetengetriebes und dem Innenumfang der Nabenhülse angeordnet. Zur Verringerung des Totgangwinkels des ersten Klinkengesperres wird eine geeignete Anzahl an federbelasteten Sperrklinken auf dem Aussenumfang des Hohlrades des Planetengetriebes angebracht. Bevorzugt ist der Umfangsabstand der Sperrklinken voneinander ungleich einem Vielfachen der Teilung t des zugehörigen Zahnkranzes, wodurch der Totgangwinkel weiter verringert wird, weil nämlich die einzelnen Sperrklinken zu jedem Zeitpunkt sich in verschiedener Relativlage zu den Zähnen des Zahnkranzes befinden. Während dann z. B. eine Sperrklinke noch den maximalen Totgangwinkel bis zum Eingriff in den nächsten Zahn zurücklegen muss, ist eine andere Sperrklinke bzw. Sperrklinkengruppe näher am Eingriffspunkt. Um diese Wirkung zu erreichen, können die Sperrklinken untereinander auch einen unterschiedlichen Umfangsabstand besitzen.

Besonders bevorzugt ist die Übersetzungsnabe mit schaltbaren Übersetzungen versehen. Zu diesem Zweck wird die Kupplungshülse, welche zwischen Antreiber und den Planetengetriebeelementen wirkt, axial verschiebbar ausgebildet und verbindet in einer ersten Stellung den Antreiber mit dem Hohlrad (Normalgang) und in einer zweiten Stellung den Antreiber mit dem Planetenträgerrad (Schnellgang). Ausserdem kann ein drittes Klinkengesperre vorgesehen werden, welches auf dem Planetenträgerrad angeordnet ist und zur Verwirklichung eines dritten Ganges (Berggang) dient, wenn zuvor — über die Gangschaltung — das erste Klinkengesperre durch axiale Verschiebung ausser Wirkung gesetzt ist.

Gemäss der Erfindung wird die erfindungsgemässe Übersetzungsnabe in Rollstühle eingebaut, die einen Rahmen besitzen und mindestens zwei seitliche Laufräder, und je ein Greifrad zum Antreiben der Laufräder. Die Achse der Nabe und der Bremshebel sind am Rahmen des Rollstuhls nicht drehbar befestigt. Die Laufräder sind an der Nabenhülse, und die Greifreifen an dem Antreiber befestigt.

Vorteilhafte Weiterbildungen der Erfindung sind durch die Merkmale der Unteransprüche gekennzeichnet.

Im folgenden werden Ausführungsbeispiele der Erfindung anhand der Zeichnung näher erläutert. Es zeigen :

Figur 1 eine erfindungsgemässe Übersetzungsnabe im halben Längsschnitt ;

Figur 2 eine zweite Ausführungsform der Erfindung, im Schnitt ; und

Figur 3 einen Schnitt längs der Linie III-III der Fig. 1.

Auf einer festen Nabenachse 1 sind einerseits ein Antreiber 2 und andererseits ein Hebelkonus 3 angeordnet, auf welchen eine Nabenhülse 4 mittels Kugellager 5 bzw. 6 drehbar gelagert ist.

Der Antreiber 2 ist über ein ständig gekuppeltes, axial verschiebbares, hülsenförmiges Kupplungsglied 9, welches seinerseits auf verschiedenen Durchmessern Kupplungsaussenverzahnungen aufweist, wahlweise verbindbar mit einem eine Innenverzahnung aufweisenden Planetenradträger 10 oder mit dem Hohlrad 14 des Planetengetriebes 10-14. Das Planetengetriebe umfasst dabei ausser dem auf der Nabenachse 1 drehbaren Planetenradträger 10 Planetenräder 11 auf Achsen 12 am Planetenradträger, ein auf der Nabenachse 1 drehfestes Sonnenrad 13 sowie das Hohlrad 14, welches ständig im Eingriff steht mit den Planetenrädern 11. Auf dem hülsenförmigen Schaft des Planetenradträgers 10 ist eine Schnecke angeordnet, auf der axial verschraubbar ein Bremskonus 17 angebracht ist, der bei Rückwärtsdrehung des Antreibers ein Bremsglied 27 axial gegen den Hebelkonus 3 schiebt und dann auswärts gegen die Nabenhülse 4 spreizt und andrückt.

Zwischen dem Hohlrad 14 und der Nabenhülse 4 ist ein erstes Klinkengesperre 15, 18 mit Freilauf angebracht, welches in einem Klinkenrad 15 Sperrklinken 15c trägt, die gegen einen Innenzahnkranz 18 federbelastet sind und zur Übertragung des vom Antreiber 2 über das Planetengetriebe 10-14 eingeleiteten, in Vorwärtsdrehrichtung wirkenden Antriebsmoments in die Innenverzahnung 18 einklinken.

Vorgesehen ist ferner ein drittes Klinkengesperre 16, 19, dessen Klinkenrad auf dem Bremskonus 17 angeordnet ist, von dem aus federbelastete Sperrklinken in eine Innenverzahnung 19 der Nabe 4 eingreifen können, wenn ein Antriebsmoment in Vorwärtsdrehrichtung übertragen werden soll.

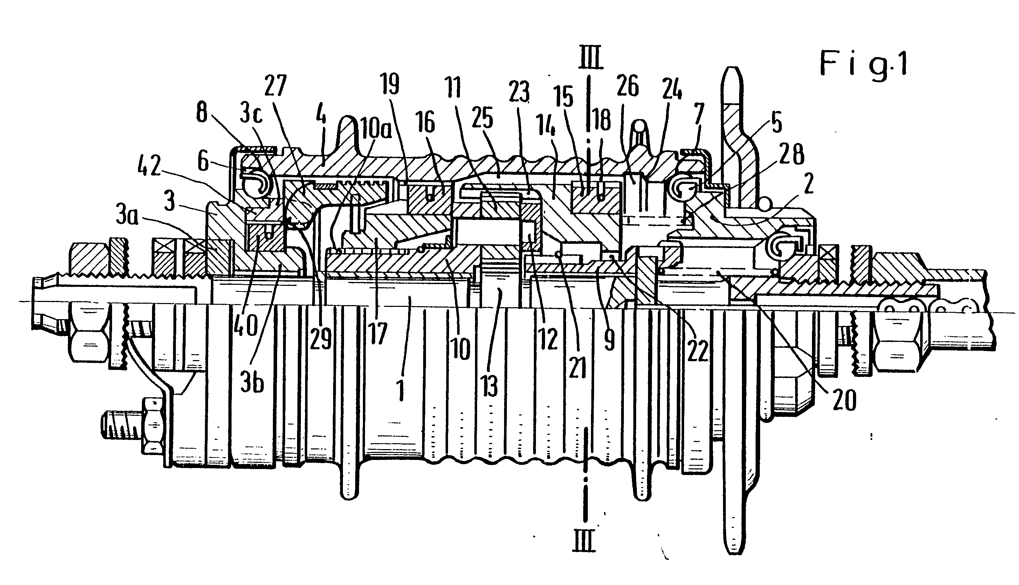

Die dargestellte Übersetzungsnabe besitzt drei verschiedene Übersetzungen, die wahlweise eingeschaltet werden können und auch als « Gänge » bezeichnet werden. In Fig. 1 ist die Schaltstellung « Schnellgang » dargestellt, in der über die auf der Nabenachse 1 drehbar und axial verschiebbar gelagerte Kupplungshülse 9 der Antreiber 2 mit dem auf der Nabenachse 1 drehbaren Planetenradträger 10 verbunden ist, bis er seinerseits über die Planetenräder 11 das Hohlrad 14 antreibt, und zwar mit grösserer Drehzahl, so dass das Klinkengesperre 15 auf dem Hohlrad 14 die Nabenhülse über die Innenverzahnung 18 antreibt, während das auf dem langsamer drehenden Bremskonus 17 auf dem Schaft des Planetenradträgers 10 befindliche Klinkengesperre 16 nicht zum Eingriff in die zugeordnete Innenverzahnung 19 in der Nabenhülse 4 gelangt, weil diese infolge Antriebs über das schneller laufende Hohlrad 14 schneller umläuft und dadurch für das Klinkengesperre 16 ein Freilaufzustand eintritt.

Bei entsprechender Verschiebung der Kupplungshülse 9 über einen nicht näher bezeichneten Schubklotz mit Schaltstange und Schaltzugkette in der hohlgebohrten Nabenachse 1 nach rechts in der Figur, wird die Antriebsverbindung des Antreibers 2 über die Kupplungshülse 9 mit dem Planetenradträger 10 aufgehoben und statt dessen das Hohlrad 14 von der Kupplungshülse 9 direkt angetrieben durch Eingriff der Kupplungsverzahnung der Kupplungshülse 9 mit der Innenverzahnung 22 im Hohlrad 14. Der Antriebsschluss geht nunmehr vom Antreiber 2 über die Kupplungshülse 9 unmittelbar in das Hohlrad 14, welches seinerseits mit dem Klinkengesperre 15, 18 die Nabenhülse 4 im « Normalgang » antreibt.

Die dritte mögliche Schaltstellung des Ausführungsbeispiels, der « Berggang » wird dadurch erhalten, dass die Kupplungshülse 9 mittels der erwähnten Schaltzugelemente auf der Nabenachse 1 noch weiter nach rechts verschoben wird, und zwar gegen die Spannkraft einer Druckfeder 20 in die Bohrung des Antreibers 2 hinein. Mit dieser axialen Verschiebung der Kupplungshülse 9 wird zugleich auch das Hohlrad 14 axial verschoben, gegen eine Druckfeder 28, weil ein auf der Kupplungshülse 9 angeordneter, innen spannender Sprengring 21 an der Kupplungsinnenverzahnung 22 des Hohlrades 14 anschlägt und dieses dann gleichfalls in der Figur nach rechts verschiebt, um den gleichen Betrag der axialen Verschiebung der Kupplungshülse 9. Bei dieser axialen Verschiebung des Hohlrades 14 wird zwar der Eingriff mit den Planetenrädern 11 beibehalten, so dass der Planetenradträger 10 weiterhin vom Antreiber 2 über die Kupplungshülse 9 und das unmittelbar gekuppelte Hohlrad 14 angetrieben werden kann, jedoch werden die Sperrklinken des Klinkengesperres 15 auf dem Hohlrad 14 dadurch ausser Eingriff mit der Innenverzahnung 18 der Nabenhülse 4 gebracht, daß bei der axialen Verschiebung des Hohlrades 14 nach rechts die Sperrklinken 14 in den Bereich eines konischen Ringes 24 kommen, dessen Durchmesser in der Nabenhülse nach rechts hin abnimmt. Dadurch werden die Sperrklinken des Klinkengesperres 15 radial nach innen gedrückt und gelangen dadurch ausser Eingriff mit der Innenverzahnung 18. Die Übertragung des Vorwärts-Antriebsmomentes erfolgt vom allein angetriebenen Hohlrad 14 über den Planetenradträger 10, der nunmehr langsamer dreht und seinerseits den Bremskonus 17 mit den darauf befindlichen Sperrklinken des Klinkengesperres 16 antreibt, welches nun die Verbindung zur Nabenhülse 4 herstellt und diese im langsamen Gang antreibt.

Der Planetenradträger 10 besitzt auf seinem gegen den Hebelkonus 3 gerichteten Ende eine Schnecke 10a, auf der der Bremskonus 17 axial verschraubbar oder verschiebbar gelagert ist und mit einer Konusfläche gegen ein Bremsglied 27 wirkt, wenn der Antreiber 2 über die Kupplungshülse 9 und ggfs. das Hohlrad 14 den Planetenradträger 10 relativ zur Nabenachse in Rückwärtsrichtung dreht. Das Bremsglied 27 kommt dadurch — bei Rückwärtsdrehung des Antreibers 2 — bei gleichzeitiger Abstützung auf dem Hebelkonus 3 in Reibschluss mit der Nabenhülse 4, welche dadurch abgebremst wird.

Zwischen dem Bremsglied 27 und dem Bremshebel 3a bzw. dem Rahmen des Fahrzeuges ist ein weiteres Klinkengesperre 40, 42 vorgesehen, welches freiläuft, wenn auf das Bremsglied 27 ein Drehmoment in Rückwärtsrichtung ausgeübt wird. Zu diesem Zweck ist — in der in Fig. 1 dargestellten Ausführungsform — der Hebelkonus 3 in ein äusseres Teil 3b, welches über den Bremshebel 3a am Rahmen des Fahrzeuges befestigbar ist, und einen drehbaren inneren Teil 3c unterteilt, der die Stützfläche für das Bremsglied 27 enthält. Das Klinkengesperre 40, 42 besitzt ein Klinkenrad 42 auf dem äusseren Teil 3b des Hebelkonus, welches Sperrklinken trägt, die gegen eine Innenverzahnung auf dem Teil 3c federbelastet sind und freilaufen, wenn der drehbare innere Teil 3c des Hebelkonus — über das Bremsglied 27, den Bremskonus 17, den Planetenradträger 10, die Kupplungshülse 9 und den Antreiber 2 — ein Drehmoment in Rückwärtsrichtung erfährt. Wird dagegen — beim Abbremsen einer in Vorwärtsrichtung laufenden Nabenhülse 4 — über das Bremsglied 27 ein Drehmoment in Vorwärtsrichtung auf den Teil 3c des Hebelkonus 3 ausgeübt, so koppelt das Klinkengesperre 40, 42 den Teil 3c fest an den Teil 3b des Hebelkonus 3, der am Rahmen des Fahrzeugs befestigt ist. Der Teil 3c des Hebelkonus und das Bremsglied 27 sind unverdrehbar mittels eines Koppelelementes 29 miteinander verkoppelt.

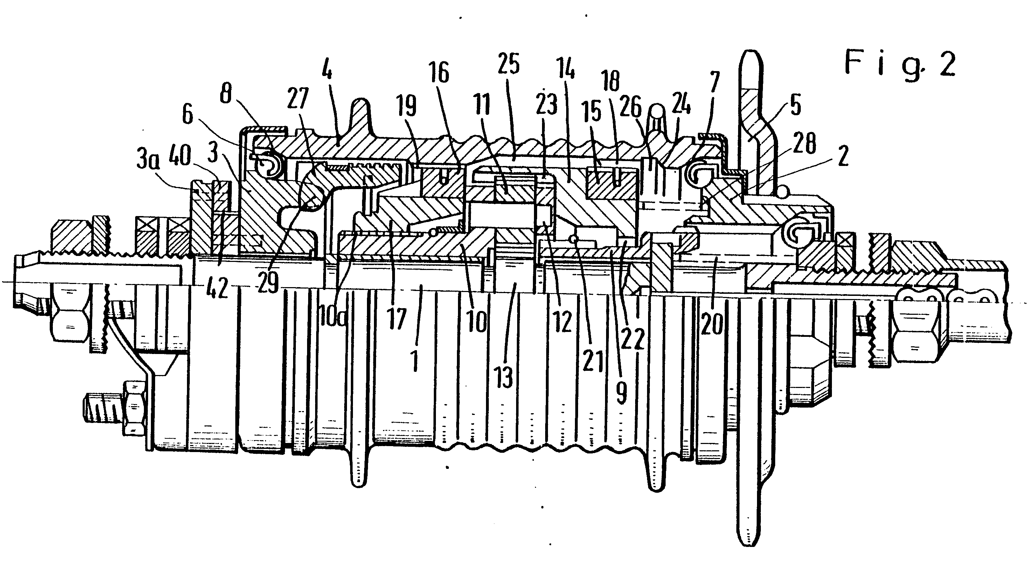

Gemäss der in Fig. 2 dargestellten Ausführungsform der Erfindung ist das Klinkengesperre 40, 42 zwischen dem Bremshebel 3a und dem Bremskonus 3 angeordnet, der einstückig ausgebildet ist. An der äusseren Stirnseite des Hebelkonus 3 ist ein Zahnkranz 42 befestigt, der mit einer federbelasteten Sperrklinke 40 zusammenwirkt, die am Bremshebel 3a befestigt ist. Das Klinkengesperre 40, 42 läuft frei, wenn — vom Antreiber 2 her — ein Drehmoment in Rückwärtsrichtung über das gespreizte Bremsglied 27 eingeleitet wird, es ist dagegen gesperrt, wenn — von der in Vorwärtsrichtung drehenden Nabenhülse 4 — über das aktivierte Bremsglied 27 ein Drehmoment in Vorwärtsrichtung eingeleitet wird. Das Bremsglied 27 ist mittels des Kopplungselements 29 unverdrehbar mit dem Hebelkonus 3 gekoppelt.

Sowohl die Übertragungsnabe gemäss Fig. 1 als auch diejenige gemäss Fig. 2 besitzt somit mehrere Vorwärtsgänge, eine durch Rückwärtsdrehung des Antreibers aktivierbare aktive Nabenbremse (Rücktrittsbremse) und einen Rückwärtsgang, bei dem die Klinkengesperre 15, 18 und 16, 19 freilaufen, der Kraftschluss vom Antreiber 2 über die Kupplungshülse 9, das Planetengetriebe 10-14, den Bremskonus 17, das Bremsglied 27 über einen Reibschluss zur Nabenhülse 4 hin erfolgt, wobei die Rückwärtsdrehung nur ermöglicht wird, weil das weitere Klinkengesperre 40, 42 dann ebenfalls freiläuft.

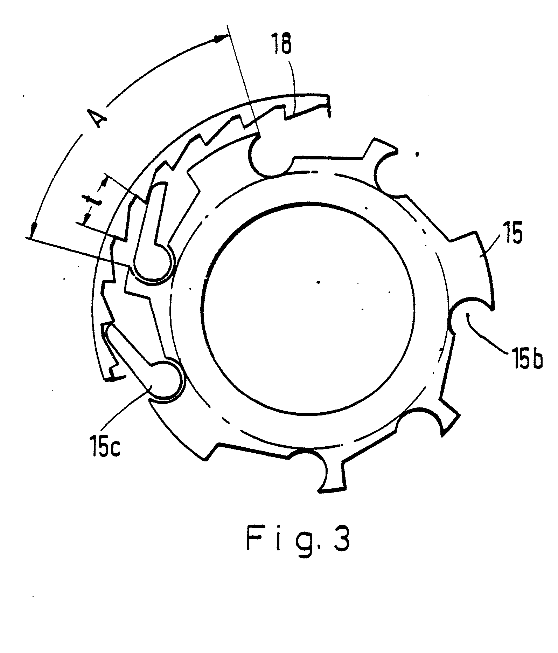

Fig. 3 zeigt eine Ausführungsform des Klinkenrads 15 oder 16 der Klinkengesperre 15, 18 bzw. 16, 19. In der dargestellten Ausführungsform sind die Klinkensitze 15b, welche die Klinken 15c aufnehmen, in unterschiedlichem Abstand voneinander angeordnet. Dadurch wird der Totgangwinkel, der bis zum Eingriff einer Sperrklinke 15c in einen der Zähne der Innenverzahnung 18 zurückgelegt werden muss, verringert. Alternativ lassen sich die Sperrklinken 15c am Umfang äquidistant anordnen, wobei dann die Anzahl der Zähne der Innenverzahnung 18 und die Anzahl der Sperrklinken 15c so gewählt ist, dass der Abstand A der Sperrklinken voneinander ungleich einem Vielfachen der Teilung t der Innenverzahnung ist, d. h., dass die Beziehung $A \neq nt$, $n = 1, 2, 3, \ldots$ gilt.

Sollen jeweils stets zwei einander gegenüberliegende Sperrklinken gleichzeitig in Eingriff mit der Innenverzahnung 18 gelangen, so sind jeweils die entsprechenden Sperrklinken-Paare gegen benachbarte Sperrklinken-Paare entsprechend zu versetzen.

Die Fig. 1 bis 3 zeigen Übersetzungsnaben mit drei verschiedenen, durch Schaltorgane wahlweise einstellbaren Übersetzungen. Alternativ lässt sich die Übersetzungsnabe zur Verwendung in Rollstühlen jedoch auch mit lediglich einer fest eingestellten Übersetzung ausführen. In diesem Fall lässt sich der Antreiber 2 über die Kupplungshülse 9 fest mit dem Planetenradträger 10 oder dem Hohlrad 14 verbinden. Antreiber 2, Kupplungshülse 9 und Planetenradträger 10 bzw. Hohlrad 14 können dann auch einstückig ausgebildet sein. Das Klinkengesperre 16, 19 kann dann entfallen.

Werden die erfindungsgemässen Übersetzungsnaben in Rollstühle eingebaut, so werden in der Regel zwei Naben axial fluchtend in vorgegebenem Abstand voneinander zwischen einem Rollstuhlsitz an dem Rahmen des Rollstuhls angeordnet. Die Nabenachse 1 ist fest mit dem Rahmen verschraubt, an den Nabenhülsen 4 werden Lauffäder beiderseits vom Rollstuhlsitz befestigt. An den Antreibern 2 sitzt je ein Greifreifen mit einem gegenüber den Laufrädern verringerten Durchmesser, um die Laufräder von Hand antreiben zu können. Derartige Rollstühle besitzen einen oder mehrere Vorwärtsgänge, eine Nabenbremse, welche — ohne den Greifreifen loszulassen — durch Rückwärtsdrehen der Greifreifen betätigbar ist, und einen Rückwärtsgang, der beim Rückwärtsdrehen des Greifreifens aus einer Vorwärtsbewegung oder dem Stillstand des Rollstuhls heraus nach dem Aktivieren der Nabenbremse verwirklicht wird. Der Benutzer kann somit — ohne den Greifreifen loslassen zu müssen — alle gewünschten Funktionen ausführen. Insbesondere ist eine wirksame Abbremsung der Vorwärtsbewegung möglich, und der Benutzer kann ausserdem von einer Vorwärtsbewegung durch einen wirksamen Abbremsvorgang hindurch direkt in eine Rückwärtsbewegung, oder von einer Rückwärtsbewegung bzw. vom Stillstand ohne grösseren Totgangwinkel wieder in eine Vorwärtsbewegung übergehen. Und der Benutzer kann insbesondere auch eine Vorwärtsbewegung ohne merklichen Totgangwinkel zwischen Greifreifen und Laufrad durchführen, wodurch der jeweils von Hand zurückgelegte Drehwinkel voll in eine zurückgelegte Wegstrecke umgesetzt wird.

**Patentansprüche**

1. Übersetzungsnabe mit Freilauf, insbesondere für Rollstühle, enthaltend

eine Nabenachse (1), einen auf der Nabenachse (1) gelagerten Antreiber (2),

eine auf dem Antreiber (2) einerseits und einem drehbaren Hebelkonus (3) andererseits gelagerte Nabenhülse (4), wobei der Hebelkonus (3) mittels eines Bremshebels (3a) am Rahmen des Fahrzeugs befestigbar ist, ein innerhalb der Nabenhülse (4) untergebrachtes Planetengetriebe (10-14),

eine den Antreiber (2) mit dem Hohlrad (14) oder dem Planetenradträger (10) des Planetengetriebes (10-14) verbindende Kupplungshülse (9),

eine Schnecke auf dem Planetenradträger (10), auf der ein Bremskonus (17) axial verschraubbar ist und bei Rückwärtsdrehung des Antreibers (2) axial gegen ein Bremsglied (27) läuft und dabei das Bremsglied (27) gegen die Nabenhülse (4) spreizt,

mindestens ein erstes Klinkengesperre (15) zur Übertragung des vom Antreiber (2) über die Planetengetriebeelemente eingeleiteten Antriebsmoments auf die Nabenhülse (4) in Vorwärtsdrehrichtung mit einem am Hohlrad (14) angeordneten Klinkenträger (15), dessen federbelastete Sperrklinken (15c) in eine am Innenumfang der Nabenhülse (4) fest angeordnete Innenverzahnung eingreifen, dadurch gekennzeichnet, dass zwischen dem Bremsglied (27) und dem Bremshebel (3a) bzw. dem Rahmen des Fahrzeugs ein zweites Klinkengesperre (40, 42) vorgesehen ist, welches freiläuft, wenn vom Antreiber (2) über die Kupplungshülse (9), die Planetengetriebeelemente (14, 11, 10), dem Bremskonus (17) und das gespreizte Bremsglied (27) auf die Nabenhülse (4) ein Drehmoment in Rückwärtsdrehrichtung übertragen wird, und dass die Sperrklinken (15c) spielfrei im Klinkenträger (15) angeordnet sind, der drehfest mit dem Hohlrad (14) verbunden ist.

2. Übersetzungsnabe nach Anspruch 1, dadurch gekennzeichnet, dass das Bremsglied (27) axial gegen den Hebelkonus (3) hin verschiebbar gelagert ist und mit mindestens einem freilaufenden Teil des Hebelkonus (3) unverdrehbar gekoppelt ist, der durch das zweite Klinkengesperre (40, 42) in Rückwärtsdrehrichtung freilaufen kann.

3. Übersetzungsnabe nach Anspruch 1 oder 2, dadurch gekennzeichnet, dass der Hebelkonus (3) in ein mittels des Bremshebels (3a) am Rahmen des Fahrzeugs festsetzbares äusseres Teil (3b) und ein freilaufbares inneres Teil (3c) unterteilt ist, und dass das zweite Klinkengesperre (40, 42) zwischen dem äusseren und dem inneren Teil (3b, 3c) des Hebelkonus angeordnet ist.

4. Übersetzungsnabe nach Anspruch 1 oder 2, dadurch gekennzeichnet, dass das zweite Klinkengesperre (40, 42) zwischen dem Hebelkonus (3) und dem Bremshebel (3a) angeordnet ist.

5. Übersetzungsnabe nach Anspruch 4, dadurch gekennzeichnet, dass zur Ausbildung des zweiten Klinkengesperres (40, 42) der Hebelkonus (3) stirnseitig einen Zahnkranz (42) enthält, in den eine federbebelastete Sperrklinke (40) vom Bremshebel (3a) oder vom Rahmen des Fahrzeugs aus eingreift und den Hebelkonus (3) bei einem in Vorwärtsrichtung wirkenden Drehmoment fest mit dem Bremshebel (3a) koppelt, und den Hebelkonus (3) bei einem Drehmoment in Rückwärtsdrehrichtung freilaufen lässt.

6. Übersetzungsnabe nach einem der vorstehenden Ansprüche, dadurch gekennzeichnet, dass die federbelasteten Sperrklinken des ersten Klinkengesperres (15, 18) voneinander den gleichen Umfangsabstand A besitzen.

7. Übersetzungsnabe nach Anspruch 6, dadurch gekennzeichnet, dass der Umfangsabstand A der Sperrklinken (15c) des ersten Klinkengesperres (15, 18) ungleich einem Vielfachen der Teilung t der zugehörigen Innenverzahnung (18) des ersten Klinkengesperres (15, 18) ist.

8. Übersetzungsnabe nach einem der Ansprüche 1 bis 5, dadurch gekennzeichnet, dass die Sperrklinken (15c), des ersten Klinkengesperres (15, 18) voneinander einen unterschiedlichen Abstand A besitzen.

9. Übersetzungsnabe nach Anspruch 8, dadurch gekennzeichnet, dass die Sperrklinken (15c) des ersten Klinkengesperres paarweise einen unterschiedlichen Abstand voneinander besitzen.

10. Übersetzungsnabe nach einem der vorstenenden Ansprüche, dadurch gekennzeichnet, dass die Kupplungshülse (9) zur Verwirklichung mehrerer Vorwärtsgänge axial verschiebbar gelagert ist und auf der Nabenachse (1) in einer ersten Stellung den Antreiber (2) mit dem Hohlrad (14), in einer zweiten Stellung den Antreiber mit dem Planetenträgerrad (10) des Planetenradgetriebes (10-14) antreibt.

11. Übersetzungsnabe nach einem der vorstehenden Ansprüche, dadurch gekennzeichnet, dass das Hohlrad (14) zusammen mit dem Klinkenrad (15) des ersten Klinkengesperres axial verschiebbar ausser Eingriff setzbar ist, und dass ein drittes Klinkengesperre (16, 19) zwischen dem Bremskonus (17) und dem Innenumfang der Nabenhülse (4) angeordnet ist und zur Übertragung des vom Antreiber (2) über den Planetenradträger (10) eingeleiteten Vorwärtsantriebsmoments auf die Nabenhülse (4) dient, wenn das erste Klinkengesperre (15, 18) ausser Eingriff ist.

12. Übersetzungsnabe nach einem der Ansprüche 1 bis 9, dadurch gekennzeichnet, dass die Kupplungshülse (9) mit dem Antreiber (2) einerseits und dem Planetenradträger (10) oder dem Hohlrad (14) andererseits fest verbunden ist.

13. Rollstuhl mit einem Rahmen, mindestens zwei Laufrädern auf beiden Seiten eines rahmenfesten Sitzes, mit je einem Greifrad zum Antreiben der Laufräder, und mit einer Übersetzungsnabe für jedes Laufrad nach einem der Ansprüche 1 bis 12, wobei die Achse (1) und der Bremshebel (3a) der Übersetzungsnabe am Rahmen, und die Laufräder an der Nabenhülse (4) befestigt sind, dadurch gekennzeichnet, dass der Greifreifen fest mit dem Antreiber (2) der Übersetzungsnaben (1-42) verbunden ist.

## Claims

1. A transmission hub with freewheeling, particularly for wheel chairs, containing

a hub spindle (1), a driver (2) supported on the hub spindle (1),

a hub sleeve (4) supported on the driver (2) at one side and on a rotatable lever-cone (3) at the other side, where the lever-cone (3) may be fastened by means of a brake lever (3a) to the frame of the vehicle,

an epicyclic gear (10-14) accommodated inside the hub sleeve (4),

a coupling sleeve (9) connecting the driver (2) to the internal gear (14) or to the pinion cage (10) of the epicyclic gear (10-14), a thread on the pinion cage (10), along which a brake cone (17) may be screwed axially and upon turning the driver (2) backwards runs axially against a brake member (27) and in doing so spreads the brake member (27) against the hub sleeve (4),

at least one first ratchet gear (15) for the transmission of the driving torque introduced by the driver (2) via the parts of the epicyclic gear to the hub sleeve (4) in the forwards direction of rotation by a pawl carrier (15) arranged on the internal gear (14), the spring-loaded pawls (15c) of which engage in internal teeth arranged fixed to the inner circumference of the hub sleeve (4), characterized in that between the brake member (27) and the brake lever (3a) or respectively the frame of the vehicle a second ratchet gear (40, 42) is provided, which freewheels if a torque in the backwards direction of rotation is transmitted by the driver (2) via the coupling sleeve (9), the parts of the epicyclic gear (14, 11, 10), the brake cone (17) and the spread brake member (27) to the hubsleeve (4), and that the pawls (15c) are arranged free of play in the pawl carrier (15) which is connected so as to rotate together with the internal gear (14).

2. A transmission hub as in Claim 1, characterized in that the brake member (27) is supported to be able to shift axially towards the lever-cone (3) and is coupled so as to be unable to twist with at least one freewheeling part of the lever-cone (3), which through the second ratchet gear (40, 42) can freewheel in the backwards direction of rotation.

3. A transmission hub as in Claim 1 or 2, characterized in that the lever-cone (3) is subdivided into an outer part (3b) which by means of the brake lever (3a) may be fixed to the frame of the vehicle and an inner part (3c) able to freewheel, and that the second ratchet gear (40, 42) is arranged between the outer and inner parts (3b, 3c) of the lever-cone.

4. A transmission hub as in Claim 1 or 2, characterized in that the second ratchet gear (40, 42) is arranged between the lever-cone (3) and the brake lever (3a).

5. A transmission hub as in Claim 4, characterized in that for the construction of the second ratchet gear (40, 42) the lever-cone (3) contains at its endface a gear rim (42) in which a spring-loaded pawl (40) engages from the brake lever (3a) or from the frame of the vehicle and couples the lever-cone (3) firmly to the brake lever (3a) in the case of a torque acting in the forwards direction and lets the lever-cone (3) freewheel in the case of a torque in the backwards direction of rotation.

6. A transmission hub as in one of the preceding Claims, characterized in that the spring-loaded pawls of the first ratchet gear (15, 18) have the same circumferential spacing A from one another.

7. A transmission hub as in Claim 6, characterized in that the circumferential spacing A of the pawls (15c) of the first ratchet gear (15, 18) is unequal to a multiple of the pitch t of the associated internal teeth (18) of the first ratchet gear (15, 18).

8. A transmission hub as in one of the Claims 1 to 5, characterized in that the pawls (15c) of the first ratchet gear (15, 18) have spacings A differing from one another.

9. A transmission hub as in Claim 8, characterized in that the pawls (15c) of the first ratchet gear have spacings differing from one another in pairs.

10. A transmission hub as in one of the preceding Claims, characterized in that the coupling sleeve (9) for the realization of a number of forwards speeds is supported to be able to shift axially and in a first position on the hub spindle (1) drives the driver (2) by the internal gear (14) and in a second position drives the driver by the pinion cage (= « Planeten-rad-träger ») (10) of the epicyclic gear (10-14).

11. A transmission hub as in one of the preceding Claims, characterized in that the internal gear (14) together with the ratchet wheel (15) of the first ratchet gear by being able to shift axially may be put out of engagement and that a third ratchet gear (16, 19) is arranged between the brake cone (17) and the inner circumference of the hub sleeve (4) and serves for the transmission to the hub sleeve (4) of the forwards driving torque introduced by the driver (2) via the pinion cage (10), if the first ratchet gear (15, 18) is out of engagement.

12. A transmission hub as in one of the Claims 1 to 9, characterized in that the coupling sleeve (9) is firmly connected to the driver (2) at one side and to the pinion cage (10) or the internal gear (14) at the other side.

13. A wheel chair having a frame, at least two running wheels on opposite sides of a seat fixed to the frame, each having a grip wheel for driving the running wheel, and having a transmission hub for each running wheel as in one of the Claims 1 to 12, where the spindle (1) and the brake lever (3a) of the transmission hub are fastened to the frame, and the running wheels are fastened to the hub sleeve (4), characterized in that the grip tyre is firmly connected to the driver (2) of the respective transmission hub (1-42).

## Revendications

1. Moyeu de transmission à roue libre, notamment pour fauteuils roulants, comportant :
un axe de moyeu (1), un organe d'entraînement (2) monté sur l'axe de moyeu (1),
une douille de moyeu (4) montée, d'une part sur l'organe d'entraînement (2) et, d'autre part, sur un cône à levier (3) monté à rotation, le cône à levier (3) pouvant être fixé sur le châssis du véhicule au moyen d'un levier de frein (3a),
une transmission épicycloïdale (10, 14) disposée à l'intérieur de la douille de moyeu (4),
une douille d'accouplement (9) reliant l'organe d'entraînement (2) à la couronne (14) ou au porte-satellites (10) de la transmission épicycloïdale,
une vis sur le porte-satellites (10), vis sur laquelle un cône de frein (17) peut se visser en direction axiale et, lors de la rotation de marche arrière de l'organe d'entraînement (2), se déplace en direction axiale contre un organe de freinage (27) en dilatant alors l'organe de freinage (27) contre la douille de moyeu (4),
au moins un premier encliquetage pour transmettre, par les éléments de la transmission épicycloïdale, le couple introduit par l'organe d'entraînement (2) à la douille de moyeu (4), dans le sens de rotation de marche avant, avec un porte-cliquets (15) disposé sur la couronne (14), les cliquets d'arrêt (15c) de ce support, chargés par des ressorts, engrenant dans une denture intérieure disposée fixe sur la surface latérale inférieure de la douille de moyeu (4), caractérisé en ce qu'un second encliquetage (40, 42) est prévu entre l'organe de freinage (27) et le levier de frein (3a) ou le châssis du véhicule, cet encliquetage tournant en roue libre quand un couple de rotation dans le sens de marche arrière est transmis par l'organe d'entraînement (2) à la douille de moyeu (4) par l'intermédiaire de la douille d'accouplement (9), des éléments de la transmission épicycloïdale (14, 11, 10), du cône de frein (17) et de l'organe de freinage dilaté (27), et en ce que les cliquets d'arrêt (15c) sont disposés sans jeu dans le porte-cliquets (15), qui est assemblé solidairement en rotation avec la couronne (14).

2. Moyeu de transmission selon la revendication 1, caractérisé en ce que l'organe de freinage (27) est monté pour coulisser en direction axiale contre le cône à levier (3) et est accouplé sans possibilité de rotation relative avec au moins un élément à rotation libre du cône à levier (3) qui, par l'intermédiaire du second encliquetage (42), peut tourner librement dans le sens de rotation de marche arrière.

3. Moyeu de transmission selon la revendication 1 ou 2, caractérisé en ce que le cône à levier (3) est divisé en une partie extérieure (3b) pouvant être fixée sur le châssis du véhicule au moyen du levier de frein (3a) et en une partie intérieure (3c) pouvant tourner librement, et en ce que le second encliquetage (40, 42) est disposé entre les parties extérieure et intérieure (3b, 3c) du cône à levier.

4. Moyeu de transmission selon la revendication 1 ou 2, caractérisé en ce que le second encliquetage (40, 42) est disposé entre le cône à levier (3) et le levier de frein (3a).

5. Moyeu de transmission selon la revendication 4, caractérisé en ce que pour constituer le second encliquetage (40, 42), le cône à levier (3) présente, sur sa face frontale, une couronne dentée (42) dans laquelle un cliquet d'arrêt (40) chargé par ressort engrène à partir du levier de frein (3a) ou du châssis du véhicule et accouple solidairement, dans le cas d'un couple de rotation agissant dans le sens de marche avant, le cône à levier (3) avec le levier de frein (3a), et laissant tourner le cône à levier (3) en roue libre dans le cas d'un couple de rotation dans le sens de rotation de marche arrière.

6. Moyeu de transmission selon l'une des revendications précédentes, caractérisé en ce que les cliquets, chargés par ressort, du premier encliquetage (15, 18) sont à la même distance périphérique A l'un de l'autre.

7. Moyeu de transmission selon la revendication 6, caractérisé en ce que la distance périphérique A entre les cliquets d'arrêts (15c) du premier encliquetage (15, 18) est différent d'un multiple du pas (t) de la denture intérieure correspondante (18) de ce premier encliquetage (15, 18).

8. Moyeu de transmission selon l'une des revendications 1 à 5, caractérisé en ce que les cliquets d'arrêt (15c) du premier encliquetage (15, 18) sont entre eux à des distances périphériques A différentes.

9. Moyeu de transmission selon la revendication 8, caractérisé en ce que les cliquets d'arrêt (15c) du premier encliquetage sont, deux par deux, à une distance différente l'un de l'autre.

10. Moyeu de transmission selon l'une des revendications précédentes, caractérisé en ce que la douille d'accouplement (9) est, pour réaliser plusieurs vitesses de marche avant, montée pour coulisser en direction axiale et, sur l'axe de moyeu (1), entraîne, dans une première position l'organe d'entraînement (2) avec la couronne (14) et, dans une seconde position, l'organe d'entraînement avec le porte-satellites (10) de la transmission épicycloïdale.

11. Moyeu de transmission selon l'une des revendications précédentes, caractérisé en ce que la couronne (14) peut, conjointement avec la roue à cliquets (15) du premier encliquetage, être dégagée par coulissement en direction axiale, et en ce qu'un troisième encliquetage (16, 19) est disposé entre le cône de frein (17) et la surface latérale intérieure de la douille de moyeu (4) et sert à transmettre à la douille de moyeu (4) le couple d'entraînement en marche avant introduit par l'organe d'entraînement (2) par l'intermédiaire du porte-satellites (10) quand le premier encliquetage (15, 18) est débrayé.

12. Moyeu de transmission selon l'une des revendications 1 à 9, caractérisé en ce que la douille d'accouplement (9) est assemblée solidairement, d'une part avec l'organe d'entraînement (2) et, d'autre part, avec le porte-satellites (10) ou la couronne (14).

13. Fauteuil roulant avec un châssis, au moins deux roues de marche d'un côté et de l'autre d'un siège solidaire du châssis, une roue de manœuvre étant respectivement prévue pour entraîner les roues de marche, et avec un moyeu de transmission pour chaque roue de marche, selon l'une des revendications 1 à 12, l'axe (1) et le levier de frein (3a) du moyeu de transmission étant fixés sur le châssis et les roues de marche étant fixées sur la douille de moyeu (4), caractérisé en ce que le bandage de manœuvre est assemblé solidairement avec l'organe d'entraînement (2) des moyeux de transmission (1, 42).

Fig.1

Fig. 2

0 161 296

Fig. 3